# EUROPÄISCHE PATENTSCHRIFT

(11) **EP 2 681 828 B1**
(45) Veröffentlichungstag und Bekanntmachung des Hinweises auf die Patenterteilung: **01.04.2015**
(21) Anmeldenummer: 12706800.5
(22) Anmeldetag: 21.02.2012
(51) Int. Cl.: H02K 1/27, H02K 7/18

(54) **ROTOR FÜR EINE ELEKTRISCHE MASCHINE**
ROTOR FOR AN ELECTRIC MACHINE
ROTOR POUR MACHINE ÉLECTRIQUE

(30) Priorität: 28.02.2011 DE 102011004852
(43) Veröffentlichungstag der Anmeldung: 08.01.2014
(73) Patentinhaber: Siemens Aktiengesellschaft, 80333 München (DE)
(72) Erfinder: HARTMANN, Ulrich, 14197 Berlin (DE); KNOP, Christian, 12161 Berlin (DE); SCHWENGBER, Robert, 15907 Lübben (DE); TROGISCH, Gordon, 15344 Strausberg (DE)
(86) Internationale Anmeldenummer: PCT/EP2012/052925
(87) Internationale Veröffentlichungsnummer: WO 2012/116908

(56) Entgegenhaltungen:
- GB-A- 2 022 324
- JP-A- 2002 084 692
- JP-A- 2006 034 024
- US-A- 5 914 552
- US-A1- 2010 231 085

## Beschreibung

Die Erfindung betrifft einen Rotor für eine elektrische Maschine. Bei elektrischen Maschinen, wie z.B. permanentmagneterregten elektrischen Generatoren oder Elektromotoren, stellt insbesondere wenn die Maschinen eine große elektrische Leistung (größer als 1 MW) aufweisen, die Befestigung der Permanentmagnete am Rotorkörper des Rotors eine große fertigungstechnische Herausforderung dar. Bisher wurden die Permanentmagnete über Schraubverbindungen am Rotorkörper befestigt. Für die Schraubverbindungen wird jedoch eine große Anzahl von durch den Rotorkörper in radiale Richtung verlaufende Bohrungen benötigt. Durch die Bohrungen können aber Schmutzpartikel oder gegebenenfalls schädliche Flüssigkeiten oder Gase von der Außenseite des Rotorkörpers zur Innenseite oder umgekehrt gelangen.

Aus der EP 1 922 801 B1 ist ein Rotor eines elektromotorischen Ventilantriebs bekannt.

Aus der US 5 914 552 A ist ein Rotor für eine elektrische Maschine bekannt, wobei der Rotor Permanentmagnete aufweist, welche mittels eines durch eine Führung gehaltenen Zwischenteils in radialer und in Umfangsrichtung fixiert werden.

Es ist Aufgabe der Erfindung einen Rotor für eine elektrische Maschine zu schaffen, bei dem die Permanentmagnete zuverlässig am Rotorkörper des Rotors gehalten werden und bei dem keine durch den Rotorkörper verlaufenden Bohrungen zur Befestigung der Permanentmagnete am Rotorkörper mehr notwendig sind.

Diese Aufgabe wird gelöst durch einen Rotor für eine elektrische Maschine, wobei der Rotor einen um die Rotationsachse des Rotors umlaufenden Rotorköper aufweist, wobei am Rotorkörper Permanentmagnete angeordnet sind, wobei der Rotorkörper in Richtung der Rotationsachse des Rotors verlaufende Ausnehmungen ausweist, wobei die Ausnehmungen derart ausgebildet sind, dass sich in Richtung der Rotationsachse des Rotors verlaufende Führungen am Rotorkörper ausbilden, wobei die Permanentmagnete durch die Führungen in radiale Richtung und in Rotationsrichtung des Rotors am Rotorkörper gehalten werden, wobei der Rotor zur Fixierung der Permanentmagnete in Richtung der Rotationsachse des Rotors an einem axialen Endbereich der jeweiligen Führung eine Verschlussvorrichtung aufweist, wobei die Verschlussvorrichtung durch die Führungen in radiale Richtung und in Rotationsrichtung des Rotors am Rotorkörper gehalten wird, wobei die Verschlussvorrichtung ein bewegbares Bewegungselement aufweist, wobei die Verschlussvorrichtung derart ausgebildet ist, dass bei einer Bewegung des Bewegungselements die Verschlussvorrichtung eine formschlüssige oder kraftschlüssige Verbindung der Verschlussvorrichtung mit dem Rotorkörper herstellt, wobei der Rotorkörper im axialen Endbereich der jeweiligen Führung eine in radiale Richtung des Rotors verlaufende Aussparung aufweist, wobei die Verschlussvorrichtung ein Verriegelungselement aufweist, wobei die Verschlussvorrichtung derart ausgebildet ist, dass bei einer Bewegung des Bewegungselements das Verriegelungselement in die Aussparung bewegt wird und solchermaßen die formschlüssige Verbindung hergestellt wird.

Vorteilhafte Ausbildungen der Erfindung ergeben sich aus den abhängigen Ansprüchen.

Es erweist sich als vorteilhaft, wenn das bewegbare Bewegungselement als ein drehbares Drehelement ausgebildet ist, wobei die Verschlussvorrichtung derart ausgebildet ist, dass bei einer Drehbewegung des Drehelements die Verschlussvorrichtung eine formschlüssige oder kraftschlüssige Verbindung der Verschlussvorrichtung mit dem Rotorkörper herstellt. Hierdurch kann eine besonders einfach aufgebaute Verschlussvorrichtung realisiert werden.

Ferner erweist es sich als vorteilhaft, wenn das Drehelement als Schraube ausgebildet ist, da dann das Drehelement besonders einfach ausgebildet ist.

Ferner erweist es sich als vorteilhaft, wenn die Verschlussvorrichtung ein keilförmig ausgebildetes Verschiebungselement aufweist, wobei das bewegbare Bewegungselement als ein drehbares Drehelement ausgebildet ist, wobei die Verschlussvorrichtung derart ausgebildet ist, dass bei einer Drehbewegung des Drehelements das Verschiebungselement in axiale Richtung des Drehelements gegen das Verriegelungselement verschoben wird und infolge der Verschiebung das Verriegelungselement in die Aussparung bewegt wird. Hierdurch wird eine besonders einfach aufgebaute zuverlässige Verschlussvorrichtung geschaffen.

Die elektrische Maschine ist vorzugsweise als Elektromotor oder Generator, insbesondere als Windkraftgenerator, ausgebildet und weist vorzugsweise eine elektrische Leistung auf, die größer als 1 MW ist. Der Windkraftgenerator kann insbesondere als direkt angetriebener Windkraftgenerator ausgebildet sein.

Ausführungsbeispiele der Erfindung sind in der Zeichnung dargestellt und werden im Folgenden näher erläutert. Dabei zeigen:
- FIG 1: eine elektrische Maschine in Form einer schematischen Darstellung,
- FIG 2: ein erfindungsgemäßer Rotor der elektrischen Maschine,
- FIG 3: eine Detailansicht des erfindungsgemäßen Rotors,
- FIG 4, 5: ein Ausführungsbeispiel einer Verschlussvorrichtung,
- FIG 6: ein Verriegelungselement,
- FIG 7: ein Verschiebungselement,
- FIG 8,9,10: eine Verschlussvorrichtung gemäß dem Ausführungsbeispiel der Verschlussvorrichtung beim Verschließen der Führungen in drei verschiedenen Stellungen.

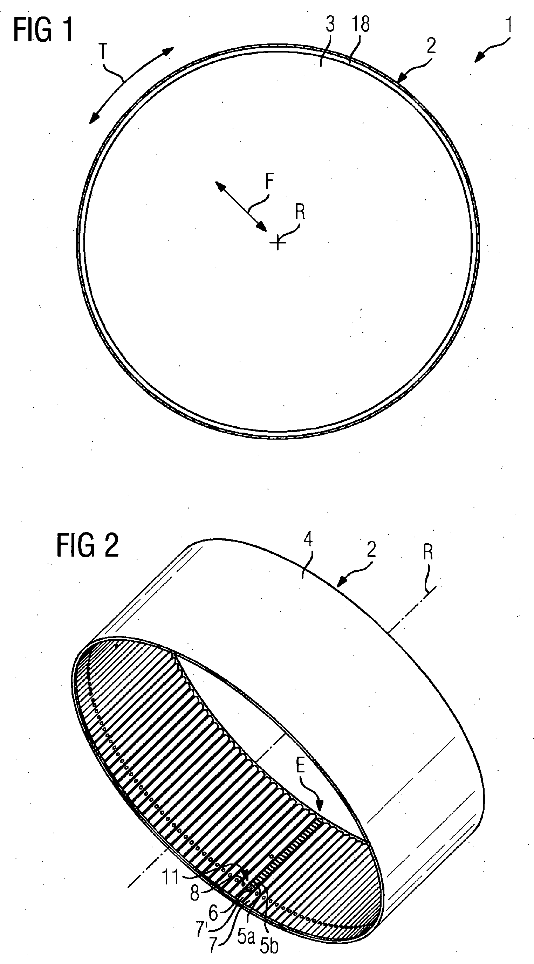

In FIG 1 ist in Form einer schematisierten Darstellung eine elektrische Maschine 1 dargestellt. Die elektrische Maschine 1 weist eine um eine Rotationsachse R rotierbar angeordneten Rotor 2 auf. Der Rotor 2 weist einen um die Rotationsachse R umlaufenden Rotorkörper 4 auf (siehe FIG 2). Der Rotorkörper 4 kann dabei massiv ausgebildet sein oder aus in Richtung der Rotationsachse R des Rotors 4 hintereinander angeordneten Blechen bestehen. Weiterhin kann der Rotorkörper 4 auch segmentiert ausgeführt sein. Der Rotorköper besteht vorzugsweise aus einem magnetisch leitenden Material. Im Inneren der Maschine 1 ist ein rundend angeordneter Stator 3 angeordnet, der in FIG 1 stark schematisiert in Form eines Zylinders dargestellt ist. Der Stator 3 weist zur Erzeugung eines magnetischen Feldes der Übersichtlichkeit halber und da zum Verständnis der Erfindung unwesentlich in FIG 1 nicht dargestellte elektrische Spulen auf. Zwischen Rotor 2 und Stator 3 ist ein Spalt 18 angeordnet, der in FIG 1 der Übersichtlichkeit halber breiter als in der Realität dargestellt ist. Im Betrieb der Maschine 1 rotiert der Rotor 2 in Rotationsrichtung T um den Stator 3. Im Rahmen des Ausführungsbeispiels ist die elektrische Maschine 1 als Generator zur Erzeugung von elektrischer Energie ausgebildet. Die elektrische Maschine 1 kann jedoch auch als Elektromotor ausgebildet sein.

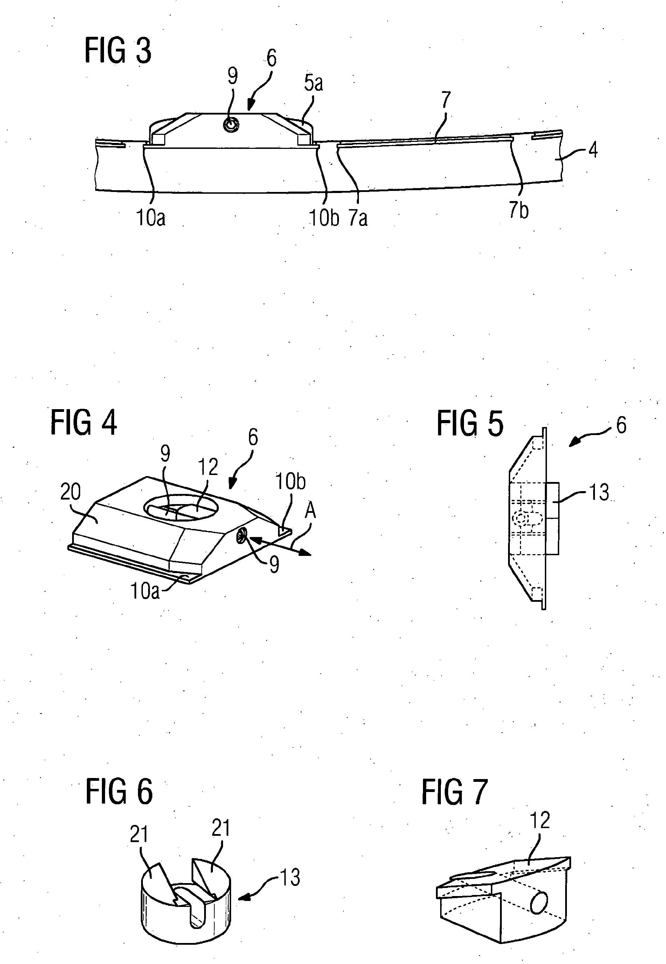

In FIG 2 und 3 ist der Rotor 2 schematisiert dargestellt, wobei FIG 3 eine in Richtung der Rotationsachse R verlaufende Detailansicht des Rotors 2 zeigt. Der Rotor 2 weist einen um die Rotationsachse R umlaufenden Rotorkörper 4 auf, wobei am Rotorkörper 4 Permanentmagnete angeordnet sind. Der Übersichtlichkeit halber sind in FIG 2 nur die beiden Permanentmagnete 5a und 5b mit Bezugszeichen versehen. Es sei dabei angemerkt, dass in FIG 3 gleiche Elemente mit den gleichen Bezugszeichen versehen sind wie in FIG 2.

Der Rotorkörper 4 weist in Richtung der Rotationsachse R des Rotors 2 verlaufende Ausnehmungen auf, wobei der Übersichtlichkeit halber nur zwei Ausnehmungen 7 und 7' mit einem Bezugszeichen versehen sind. Die Ausnehmungen sind dabei in die Umfangsfläche und im Rahmen des Ausführungsbeispiels in die innere Umfangsfläche des Rotorkörpers 4 eingebracht und liegen vorzugsweise in Form von Nuten vor. Die Ausnehmungen sind entlang des Umfangs des Rotorkörpers 4 angeordnet und verlaufen in Richtung der Rotationsachse R. Die Ausnehmungen sind derart ausgebildet, dass sich in Richtung der Rotationsachse R des Rotors 2 verlaufende Führungen am Rotorkörper 4 ausbilden. Die Ausnehmungen weisen dabei eine derartige Form aus, dass sich jeweilig Aussparungen 7a und 7b bilden. Die Aussparungen 7a und 7b bilden zusammengenommen eine Führung zur Führung der Permanentmagnete und einer Verschlussvorrichtung 6. Die Permanentmagnete weisen auf einer Seite eine zu den Führungen korrespondierende Form auf und werden zur Montage des Rotors in die Führungen in Richtung der Rotationsachse R eingeführt. Die Permanentmagnete werden durch die Führungen in radiale Richtung F (siehe FIG 1) und in Richtung der Rotationsachse R am Rotorkörper 4 gehalten. Sie sind nach dem Einführen in die Führungen nur noch in Richtung der Rotationsachse R bewegbar, d.h. genauer ausgedrückt verschiebbar. Es sei angemerkt, dass in FIG 2 und 3 der Übersichtlichkeit halber der Zustand dargestellt ist, bei dem bei der Montage des Rotors 2 gerade nur eine einzelne Ausnehmung 7' mit Permanentmagneten bestückt ist. Nach fertiger Montage des Rotors 2 sind sämtliche Ausnehmungen mit Permanentmagneten bestückt.

Der Rotor 2 weist zur Fixierung der Permanentmagnete in Richtung der Rotationsachse R an einem axialen Endbereich 11 der jeweiligen Führung eine Verschlussvorrichtung 6 auf. Selbstverständlich muss der Permanentmagnet nicht unbedingt auf einer Seite eine zu der jeweiligen Führung korrespondierende Form aufweisen, sondern kann auch z.B. auf eine Platte montiert sein, die eine zu der Führung korrespondierende Form aufweist.

Die Verschlussvorrichtung 6 wird durch die Führungen in radiale Richtung F und in Rotationsrichtung T des Rotors 2 am Rotorkörper 4 gehalten und ist somit im unverschlossenen Zustand nur in Richtung der Rotationsachse R bewegbar, d.h. genauer ausgedrückt verschiebbar. Die Verschlussvorrichtung 6 weist zwei seitliche Ausbuchtungen 10a und 10b auf, die eine zu den Aussparungen 7a und 7b korrespondierende Form aufweisen, so dass die Verschlussvorrichtungen in die Führungen eingeführt werden können. Die Verschlussvorrichtungen verhindern, dass die von den Führungen in Richtung der Rotationsachse R und in radiale Richtung F gehaltenen Permanentmagnete sich beim Rotieren des Rotors in Richtung der Rotationsachse R aus den Führungen bewegen.

Im verschlossenen Zustand sind die Verschlussvorrichtungen in den Führungen in Richtung der Rotationsachse R unbeweglich und verschließen somit die Führungen und fixieren die Permanentmagnete in Richtung der Rotationsachse R, so dass kein Austreten der Permanentmagnete aus den Führungen und somit aus dem Rotorkörper 4 mehr möglich ist. Das Bewegungselement 9 ist als ein von Außen, d.h. z.B. durch einen Bediener von außerhalb der Verschlussvorrichtung 6, bewegbares Bewegungselement ausgebildet, wobei die Verschlussvorrichtung 6 derart ausgebildet ist, dass bei einer Bewegung des Bewegungselementselements 9 die Verschlussvorrichtung 6 eine form- oder kraftschlüssige Verbindung der Verschlussvorrichtung 6 mit dem Rotorkörper 4 herstellt. Das Bewegungselement 9 ist im Rahmen des Ausführungsbeispiels als ein von Außen, d.h. z.B. durch einen Bediener von außerhalb der Verschlussvorrichtung 6, drehbares Drehelement 9 ausgebildet, wobei die Verschlussvorrichtung 6 derart ausgebildet ist, dass bei einer Drehbewegung des Drehelements 9 die Verschlussvorrichtung 6 eine form- oder kraftschlüssige Verbindung der Verschlussvorrichtung 6 mit dem Rotorkörper 4 herstellt. Das Drehelement 9 ist dabei vorzugsweise in Form einer Schraube ausgebildet.

Wie in FIG 2 dargestellt, verlaufen die Ausnehmungen und somit die Führungen, nicht vollständig in Richtung der Rotationsachse R durch den gesamten Rotorkörper 4, sondern enden kurz vor dem axialen Ende E des Rotorkörpers 4. Durch das am axialen Ende E verbleibende Material des Rotorkörpers 4 sind die Permanentmagnete gegen ein Verschieben in Richtung der Rotationsachse R in Richtung des axialen Endes E gesichert. Dies muss aber nicht unbedingt so sein, sondern die Ausnehmungen und damit die Führungen können auch in Richtung der Rotationsachse R durch den gesamten Rotorkörper 4 verlaufen, wobei in diesem Fall an beiden axialen Endbereichen der Führungen jeweilig eine Verschlussvorrichtung zur Fixierung der Permanentmagnete in den Führungen vorhanden ist. In diesem Fall wird also an beiden axialen Endbereichen der Führung jeweilig eine Verschlussvorrichtung zum Verschließen der Führung verwendet.

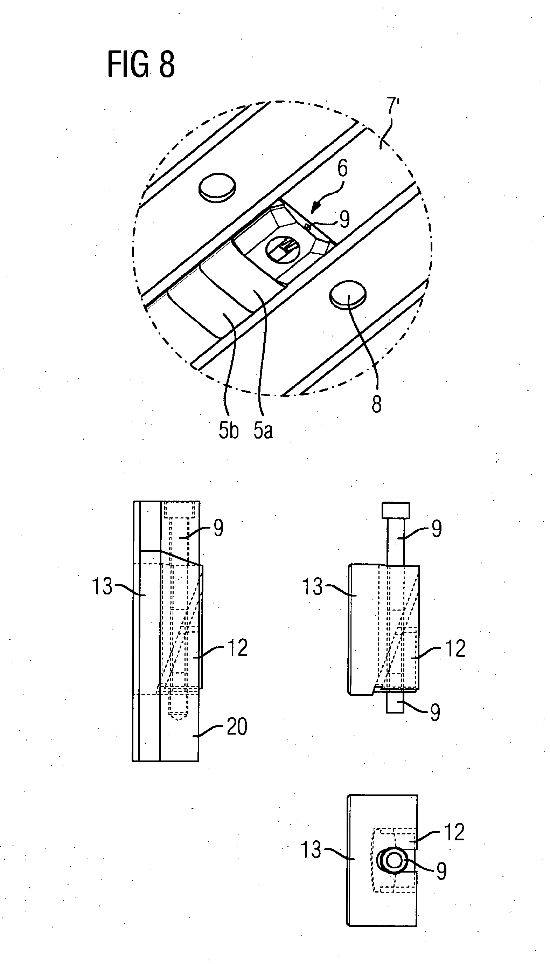

In FIG 4 und 5 ist ein Ausführungsbeispiel der Verschlussvorrichtung 6 in Form einer schematisierten Darstellung dargestellt. FIG 4 zeigt schematisiert eine perspektivische Ansicht der Verschlussvorrichtung 6 und FIG 5 eine Ansicht von vorne auf die Verschlussvorrichtung 6. Gleiche Elemente sind dabei in FIG 4 und 5 mit den gleichen Bezugszeichen versehen. Die Verschlussvorrichtung 6 weist einen Grundkörper 20 auf, der zwei seitliche Ausbuchtungen 10a und 10b aufweist, welche zu der Form der Führungen korrespondieren. Weiterhin weist die Verschlussvorrichtung 6 ein Drehelement 9 auf, das im Rahmen des Ausführungsbeispiels in Form einer Schraube ausgebildet ist. Das Drehelement 9 ist von außen zugänglich und kann somit von außen, d.h. z.B. durch einen Bediener von außerhalb der Verschlussvorrichtung 6, gedreht werden. Weiterhin weist die Verschlussvorrichtung 6 ein keilförmig ausgebildetes Verschiebungselement 12 auf, das in FIG 7 perspektivisch dargestellt ist, und ein in FIG 6 perspektivisch dargestelltes Verriegelungselement 13, das an einer Seite eine schräge Fläche 21 aufweist, auf. Wenn das Drehelement 9 gedreht wird, wird das Verschiebungselement 12 in axiale Richtung A des Drehelements 9 gegen das Verriegelungselement 13 verschoben, wobei infolge der Verschiebung das Verschiebungselements 12 gegen das Verriegelungselement 13 drückt, wodurch das Verriegelungselement 13 in die im axialen Endbereich 11 der Führungen angeordnete in radiale Richtung F des Rotors 2 verlaufende Aussparung bewegt wird und solchermaßen eine formschlüssige Verbindung von Verschlussvorrichtung 6 mit dem Rotorkörper 4 hergestellt wird. Das Verriegelungselement 13 bewegt sich beim Drehen des Drehelements 9 in die jeweilige Aussparung. In FIG 2 und in FIG 8 bis FIG 10 ist der Übersichtlichkeit halber nur eine Aussparung 8 mit einem Bezugszeichen versehen.

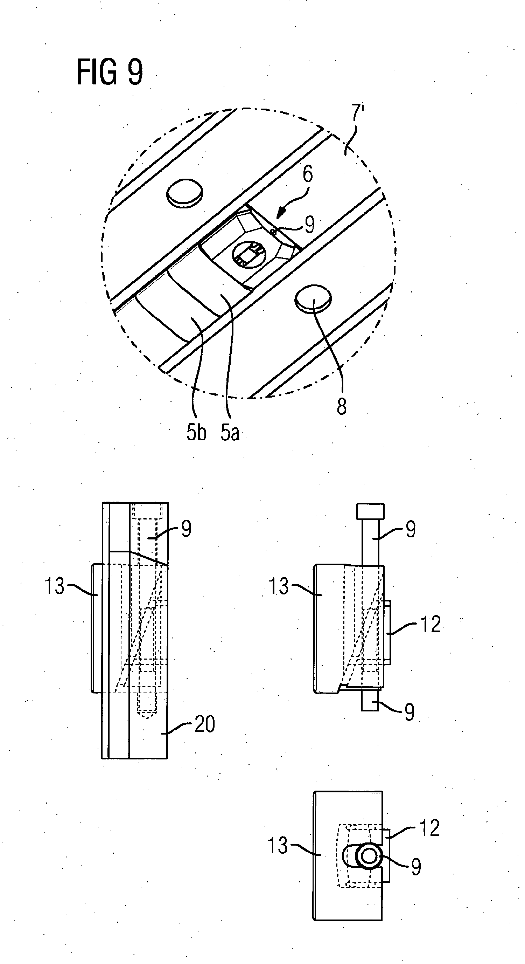

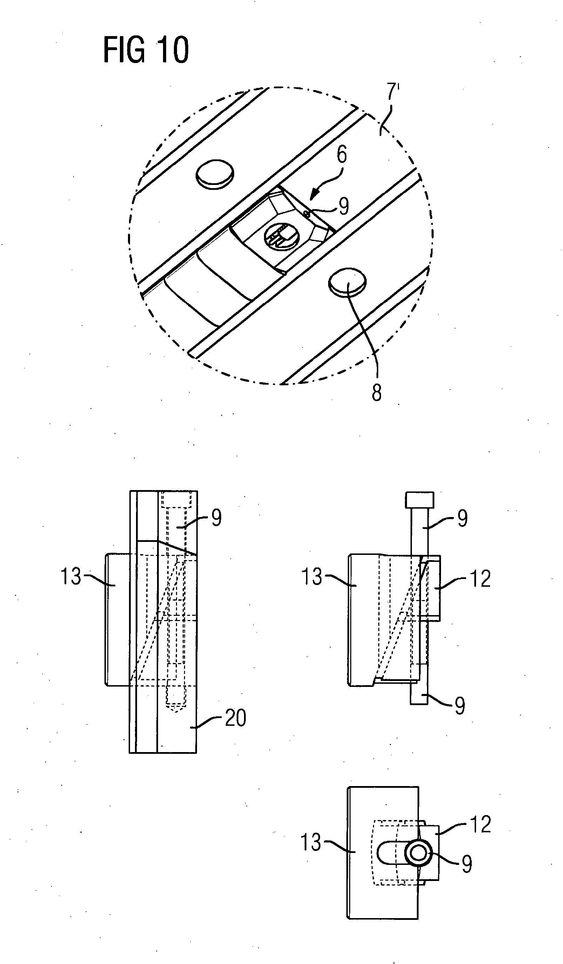

In den FIG 8, FIG 9 und FIG 10 sind die wesentlichen Elemente der Verschlussvorrichtung 6 in Form einer schematisierten Darstellung in unterschiedlichen Zuständen dargestellt. In FIG 8 ist das Verschiebungselement 12 nicht aus der Verschlussvorrichtung 6 ausgefahren. In FIG 9 ist das Verschiebungselement 12 zur Hälfte aus der Verschlussvorrichtung 6 ausgefahren und in FIG 10 ist das Verschiebungselement 12 vollständig aus der Verschlussvorrichtung 6 ausgefahren. In FIG 8, FIG 9 und FIG 10 ist dabei in der oberen Darstellung jeweils eine perspektivische Detailansicht auf den Rotorkörper 4 dargestellt. In den FIG 8, FIG 9 und FIG 10 links in der Mitte dargestellten Abbildungen ist die Verschlussvorrichtung 6 in Form einer Seitenansicht dargestellt, und in der Mitte rechts und ganz unten ist eine Seitenansicht sowie eine Frontalansicht auf die Verschlussvorrichtung 6 dargestellt, wobei der Grundkörper 20 der Übersichtlichkeit halber nicht dargestellt ist.

Im Rahmen des Ausführungsbeispiels ist die elektrische Maschine 1 als sogenannter Außenläufer ausgebildet, d.h. der Rotor 2 rotiert beim Betrieb der elektrischen Maschine 1 um den im Zentrum der Maschine ruhend angeordneten Stator 3. Die Permanentmagnete sind dabei an der inneren Umfangfläche des Rotorkörpers 4 angeordnet. Die elektrische Maschine 1 kann aber auch als sogenannter Innenläufer ausgebildet sein, d.h. der ruhend angeordnete Stator ist um den im Zentrum der elektrischen Maschine 1 rotierbar angeordneten Rotor angeordnet. Bei einer Ausbildung der elektrischen Maschine als Innenläufer sind die Permanentmagnete und die Führungen sowie die Verschlussvorrichtungen an der äußeren Umfangsfläche des Rotorkörpers 4 angeordnet.

## Patentansprüche

1. Rotor für eine elektrische Maschine (1), wobei der Rotor (2) einen um die Rotationsachse (R) des Rotors (2) umlaufenden Rotorköper (4) aufweist, wobei am Rotorkörper Permanentmagnete (5a,5b) angeordnet sind, wobei der Rotorkörper (4) in Richtung der Rotationsachse (R) des Rotors (2) verlaufende Ausnehmungen (7,7') ausweist, wobei die Ausnehmungen (7,7') derart ausgebildet sind, dass sich in Richtung der Rotationsachse (R) des Rotors (2) verlaufende Führungen (7a,7b) am Rotorkörper (4) ausbilden, wobei die Permanentmagnete (5a,5b) durch die Führungen (7a,7b) in radiale Richtung (F) und in Rotationsrichtung (T) des Rotors (2) am Rotorkörper (4) gehalten werden, wobei der Rotor (2) zur Fixierung der Permanentmagnete (5a,5b) in Richtung der Rotationsachse (R) des Rotors (2) an einem axialen Endbereich (11) der jeweiligen Führung (7a,7b) eine Verschlussvorrichtung (6) aufweist, wobei die Verschlussvorrichtung (6) durch die Führungen in radiale Richtung (F) und in Rotationsrichtung (T) des Rotors (2) am Rotorkörper (4) gehalten wird, wobei die Verschlussvorrichtung (6) ein bewegbares Bewegungselement (9) aufweist, wobei die Verschlussvorrichtung (6) derart ausgebildet ist, dass bei einer Bewegung des Bewegungselements (9) die Verschlussvorrichtung (6) eine formschlüssige oder kraftschlüssige Verbindung der Verschlussvorrichtung (6) mit dem Rotorkörper (4) herstellt, **dadurch gekennzeichnet, dass** der Rotorkörper (4) im axialen Endbereich (E) der jeweiligen Führung (7a,7b) eine in radiale Richtung (F) des Rotors 2 verlaufende Aussparung (8) aufweist, wobei die Verschlussvorrichtung (6) ein Verriegelungselement (13) aufweist, wobei die Verschlussvorrichtung (6) derart ausgebildet ist, dass bei einer Bewegung des Bewegungselements (9) das Verriegelungselement (13) in die Aussparung (8) bewegt wird und solchermaßen die formschlüssige Verbindung hergestellt wird.

2. Rotor nach Anspruch 1,
**dadurch gekennzeichnet**, dass das bewegbare Bewegungselement (9) als ein drehbares Drehelement (9) ausgebildet ist, wobei die Verschlussvorrichtung (6) derart ausgebildet ist, dass bei einer Drehbewegung des Drehelements (9) die Verschlussvorrichtung (6) eine formschlüssige oder kraftschlüssige Verbindung der Verschlussvorrichtung (6) mit dem Rotorkörper (4) herstellt.

3. Rotor nach Anspruch 2,
**dadurch gekennzeichnet**, dass das Drehelement (9) als Schraube ausgebildet ist.

4. Rotor nach einem der vorhergehenden Ansprüche,
**dadurch gekennzeichnet**, dass die Verschlussvorrichtung (6) ein keilförmig ausgebildetes Verschiebungselement (12) aufweist, wobei das bewegbare Bewegungselement (9) als ein drehbares Drehelement (9) ausgebildet ist, wobei die Verschlussvorrichtung (6) derart ausgebildet ist, dass bei einer Drehbewegung des Drehelements (9) das Verschiebungselement (12) in axiale Richtung (A) des Drehelements (9) gegen das Verriegelungselement (13) verschoben wird und infolge der Verschiebung das Verriegelungselement (13) in die Aussparung (8) bewegt wird.

5. Elektrische Maschine, wobei die Maschine (1) als Elektromotor oder Generator ausgebildet ist, wobei die Maschine (1) einen Rotor (2) nach einem der Ansprüche 1 bis 4 aufweist.

## Claims

1. Rotor for an electric machine (1), wherein the rotor (2) has a rotor body (4) located around the axis of rotation (R) of the rotor (2), wherein permanent magnets (5a,5b) are arranged on the rotor body, wherein the rotor body (4) has recesses (7,7') running in the direction of the axis of rotation (R) of the rotor (2), wherein the recesses (7,7') are constructed in such a way that they form guides (7a,7b) on the rotor body (4) which run in the direction of the axis of rotation (R) of the rotor (2), wherein the guides (7a,7b) hold the permanent magnets (5a,5b) on the rotor body (4) in the radial direction (F) and in the direction of rotation (T) of the rotor (2) wherein, for the purpose of fixing the permanent magnets (5a,5b) in the direction of the axis of rotation (R) of the rotor (2), the rotor (2) has a locking fixture (6) at an axial end region (11) of each guide (7a,7b), wherein the guides hold the locking fixture (6) on the rotor body (4) in the radial direction (F) and in the direction of rotation (T) of the rotor (2), wherein the locking fixture (6) has a movable moving element (9), wherein the locking fixture (6) is constructed in such a way that if there is a movement of the moving element (9), the locking fixture (6) produces a positive or interference fit joint between the locking fixture (6) and the rotor body (4), **characterised in that** the rotor body (4) has, in the axial end region (E) of each guide (7a,7b) concerned, an opening (8) which runs in the radial direction (F) of the rotor 2, wherein the locking fixture (6) has an interlocking element (13), wherein the locking fixture (6) is constructed in such a way that if there is a movement of the moving element (9) the interlocking element (13) is moved into the opening (8) and in such a way the positive joint is produced.

2. Rotor according to claim 1,
**characterised in that** the movable moving element (9) is constructed as a rotatable rotary element (9), wherein the locking fixture (6) is constructed in such a way that if there is a rotational movement of the rotary element (9), the locking fixture (6) produces a positive or interference fit joint between the locking fixture (6) and the rotor body (4).

3. Rotor according to claim 2,
**characterised in that** the rotary element (9) is constructed as a screw/bolt.

4. Rotor according to one of the preceding claims,
**characterised in that** the locking fixture (6) has a displacement element (12) which is constructed with a wedge shape, wherein the movable moving element (9) is constructed as a rotatable rotary element (9), wherein the locking fixture (6) is constructed in such a way that if there is a rotational movement of the rotary element (9) the displacement element (12) is displaced in the axial direction (A) of the rotary element (9) against the interlocking element (13) and as a consequence of the displacement the interlocking element (13) is moved into the opening (8).

5. Electric machine, wherein the machine (1) is constructed as an electric motor or generator, wherein the machine (1) has a rotor (2) according to one of claims 1 to 4.

## Revendications

1. Rotor pour une machine (1) électrique, le rotor (2) ayant un corps (4) de rotor tournant autour de l'axe (R) de rotation du rotor (2), des aimants (5a, 5b) permanents étant disposés sur le corps du rotor, le corps (4) du rotor (2) ayant des évidements (7, 7') s'étendant dans la direction de l'axe (R) de rotation, les évidements (7, 7') étant constitués de manière à former, sur le corps (4) du rotor, des guidages (7a, 7b) s'étendant dans la direction de l'axe (R) de rotation du rotor (2), les aimants (5a, 5b) permanents étant, par les guidages (7a, 7b), retenus au corps (4) du rotor dans la direction (F) radiale et dans la direction (T) de rotation du rotor (2), le rotor (2) ayant, pour l'immobilisation des aimants (5a, 5b) permanents, dans la direction de l'axe (R) de rotation du rotor (2), sur une zone (11) d'extrémité axiale du guidage (7a, 7b) respectif, un dispositif (6) de fermeture, le dispositif (6) de fermeture étant, par les guidages, retenu au corps (4) du rotor dans la direction (F) radiale et dans la direction (T) de rotation du rotor (2), le dispositif (6) de fermeture ayant un élément (9) de déplacement mobile, le dispositif (6) de fermeture étant constitué de manière à ce que, lors d'un déplacement de l'élément (9) de déplacement, le dispositif (6) de fermeture ménage une liaison à complémentarité de forme ou à complémentarité de force du dispositif (6) de fermeture avec le corps (4) du rotor, **caractérisé en ce que** le corps (4) du rotor a, dans la zone (E) d'extrémité axiale du guidage (7a, 7b) respectif, un évidement (8) s'étendant dans la direction (F) radiale du rotor (2), le dispositif (6) de fermeture ayant un élément (13) de verrouillage, le dispositif (6) de fermeture étant constitué de manière à ce que, lors d'un déplacement de l'élément (9) de déplacement, l'élément (13) de verrouillage soit déplacé dans l'évidement (8) et ménage ainsi la liaison à complémentarité de forme.

2. Rotor suivant la revendication 1,
**caractérisé en ce que** l'élément (9) de déplacement mobile est constitué sous la forme d'un élément (9) de rotation tournant, le dispositif (4) de fermeture étant constitué de manière à ce que, lors d'un mouvement de rotation de l'élément (9) de rotation, le dispositif (6) de fermeture ménage une liaison à complémentarité de forme ou à complémentarité de force du dispositif (6) de fermeture avec le corps (4) du rotor.

3. Rotor suivant la revendication 2,
**caractérisé en ce que** l'élément (9) de rotation est constitué sous la forme d'une vis.

4. Rotor suivant l'une des revendications précédentes,
**caractérisé en ce que** le dispositif (6) de fermeture a un élément (12) de déplacement cunéiforme, l'élément (9) de déplacement mobile étant constitué sous la forme d'un élément (9) de rotation tournant, le dispositif (6) de fermeture étant constitué de manière à ce que, lors d'un mouvement de rotation de l'élément (9) de rotation, l'élément (12) de déplacement soit déplacé dans la direction (A) axiale de l'élément (9) de rotation vers l'élément (13) de verrouillage, et de manière à ce que, à la suite du déplacement, l'élément (13) de verrouillage vienne dans l'évidement (8).

5. Machine électrique, dans laquelle la machine (1) est constituée en moteur électrique ou en génératrice, la machine (1) ayant un rotor (2) suivant l'une des revendications 1 à 4.
